# EUROPÄISCHE PATENTANMELDUNG

(11) **EP 1 564 504 A2**
(43) Veröffentlichungstag der Anmeldung: **17.08.2005**
(21) Anmeldenummer: 05101109.6
(22) Anmeldetag: 15.02.2005
(51) Int. Cl.: F24J 2/46

(54) **Anschlusselement für Sonnenkollektoren**

(30) Priorität: 17.02.2004 DE 202004002219 U
(71) Anmelder: Citrin Solar GmbH, 85358 Moosburg (DE)
(72) Erfinder: Eberl, Armin, 84028 Landshut (DE)
(74) Vertreter: Gustorf, Gerhard, Dipl.-Ing.

(57) **Zusammenfassung**

Gegenstand der Erfindung ist ein Anschlußelement für Sonnenkollektoren (10) mit einem von einem Wärmeträger durchströmten Rohr (12), dessen beide Enden über das als U-förmiges Verbindungsstück (16) ausgebildete Anschlußelement (14) mit dem Rohr (12) eines anschließenden Kollektors oder mit dem Rohr (12') einer Vorlauf- bzw. Rücklaufleitung (18, 20) verbindbar sind. Das Verbindungsstück (16) hat an beiden Enden Mittel zum Verbinden mit dem jeweiligen Ende des Rohres (12, 12') des anschließenden Kollektors bzw. der Vor- oder Rücklaufleitung. Gemäß der Erfindung ist vorgesehen, daß beide Enden des Verbindungsstücks (16) aus einem Rohrstutzen (28) mit einem Anlagebund (34) für eine Überwurfmutter (36) zum Aufschrauben auf das Anschlußgewinde (38) am Ende (40) des anzuschließenden Rohres (12, 12') bestehen, wobei das freie Ende des Rohrstutzens (28) als eine sich verjüngende Kontaktfläche (42) für den unmittelbaren Eingriff in eine konische Dichtfläche (44) am anzuschließenden Rohr (12, 12') ausgebildet ist.

## Beschreibung

Die Erfindung betrifft ein Anschlußelement für Sonnenkollektoren mit einem von einem Wärmeträger durchströmten Rohr, dessen beide Enden über das als U-förmiges Verbindungsstück ausgebildete Anschlußelement mit dem Rohr eines anschließenden Kollektors oder mit dem Rohr einer Vorlauf- bzw. Rücklaufleitung verbindbar sind, wobei das Verbindungsstück an beiden Enden Mittel zum Verbinden mit dem jeweiligen Ende des anzuschließenden Rohres hat.

Die Umwandlung von Sonnenengerie in nutzbare Wärmeenergie erfolgt in Solaranlagen mit Sonnenkollektoren, die beispielsweise auf dem Dach eines Gebäudes in Reihe miteinander verbunden sind. Hierzu dienen die eingangs erläuterten Anschlußelemente, die auch dazu verwendet werden, das Eingangsrohr des ersten Kollektors und das Ausgangsrohr des letzten Kollektors mit der Vorlauf- bzw. Rücklaufleitung zu verbinden, die beispielsweise zu einem Wärmespeicher führt. Das gesamte Rohrsystem wird dabei von einem Wärmeträger durchströmt, der für die Umwandlung der Sonnenstrahlung in Wärmeenergie sorgt.

Bisher bekannte Anschlußelemente für Sonnenkollektoren sind häufig so ausgebildet, daß sie an beiden Enden eine hitzebeständige Dichtung aufweisen, die in Flächenberührung mit dem Ende des anschließenden Rohres kommt. Die Dichtung muß dabei so ausgelegt sein, daß sie hohen Temperaturen bis etwa 200°C sowie hohen Drücken und den jeweiligen Wärmeträger-Medien standhält. Bei der Montage der Anschlußelemente dieser Bauart muß allerdings sorgfältig darauf geachtet werden, daß sich die Dichtungen nicht verkanten oder verschieben, damit eine ununterbrochene Berührung mit dem Ende des anschließenden Rohres gewährleistet wird. Außerdem ist die Betriebssicherheit derartiger Flachdichtungen mangelhaft, da sich der Dichtungswerkstoff im Laufe der Zeit mit dem Wärmeträger vereint, so daß die Dichtwirkung nachläßt. Bei Reparatur- oder Wartungsarbeiten, bei denen das U-förmige Verbindungsstück abgenommen werden muß, hat regelmäßig ein Austausch der Dichtung zu erfolgen.

Daneben sind auch Anschlußelemente mit Dichtringen aus Messing im Einsatz, die bei einer Quetschverbindung der beiden Enden in das Ende des anschließenden Rohres verpresst werden. Auch diese metallisch dichtende Verbindung ist nach Reparatur- oder Wartungsarbeiten nicht nochmals verwendbar.

Der Erfindung liegt die Aufgabe zugrunde, ein Anschlußelement für Sonnenkollektoren der eingangs umrissenen Bauart so auszubilden, daß der Einsatz von Dichtringen entbehrlich ist, ohne daß dadurch die Güte der Abdichtung beeinträchtigt wird.

Bei einem Anschlußelement für Sonnenkollektoren der im Oberbegriff des Patentanspruchs 1 angegebenen Gattung wird diese Aufgabe erfindungsgemäß dadurch gelöst, daß beide Enden des Verbindungsstücks aus einem Rohrstutzen mit einem Anlagebund für eine Überwurfmutter zum Aufschrauben auf das Anschlußgewinde am Ende des anschließenden Rohres bestehen, wobei das freie Ende des Rohrstutzens als eine sich verjüngende Kontaktfläche für den unmittelbaren Eingriff in eine konische Dichtfläche am anzuschließenden Rohr ausgebildet ist.

Diese Lösung hat den erheblichen Vorteil, daß eine sofort einsatzbereite Einheit ohne zusätzliche Dichtringe zur Verfügung steht, die eine sehr einfache Montage ermöglicht und eine Wiederverwertung nach der Durchführung von Wartungsarbeiten gestattet. Da diese Einheit keine losen Einzelteile, insbesondere Dichtringe hat, besteht keine Gefahr, daß diese während der Montage beschädigt werden oder herunterfallen und umständlich gesucht oder wiederbeschafft werden müssen. Durch die Überwurfmutter wird das sich verjüngende Ende des Rohrstutzens unmittelbar gegen die konische Dichtfläche des anzuschließenden Rohres gedrückt, so daß ein metallischer Kontakt hergestellt wird.

Weitere Merkmale und Vorteile der Erfindung ergeben sich aus den Patentansprüchen und aus der folgenden Beschreibung von zwei Ausführungsbeispielen, die in der Zeichnung dargestellt sind. Es zeigen:
Figur 1 die schematische Darstellung einer Solaranlage mit zwei Sonnenkollektoren, die über Anschlußelemente gemäß der Erfindung untereinander und mit der Vorlauf- bzw. Rücklaufleitung eines Wärmespeichers verbunden sind,
Figur 2 die vergrößerte Ansicht eines der Anschlußelemente, wobei das linke Ende im Schnitt vor der Verbindung mit dem anschließenden Rohr gezeigt ist, während das rechte Ende die fertige Verbindung mit dem angeschlossenen Rohr zeigt, und
Figur 3 eine Variante der Figur 2.

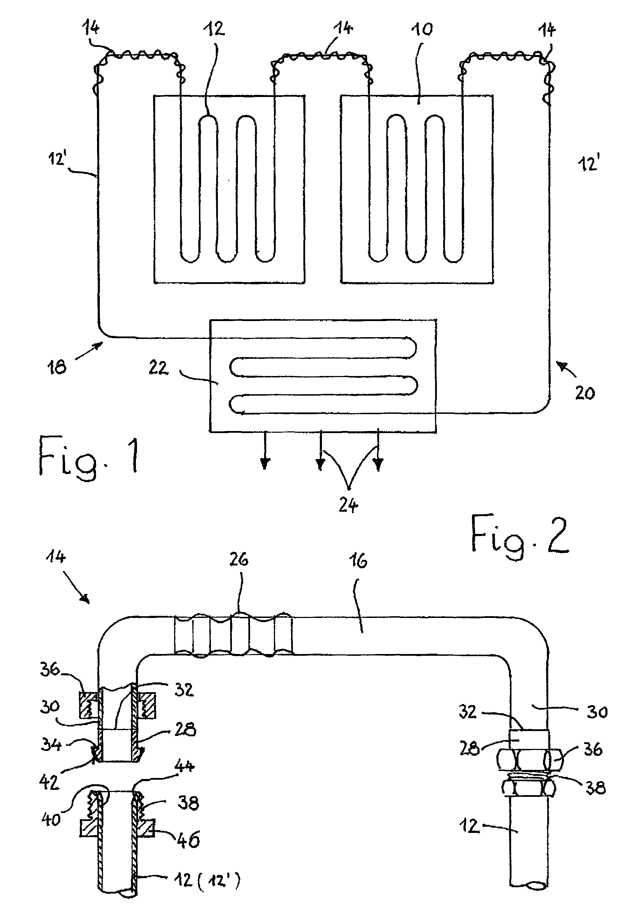

Figur 1 zeigt schematisch zwei Sonnenkollektoren 10 mit einem mäanderförmig verlegten Rohr 12, das von einem Wärmeträger durchströmt wird. Daneben sind auch harfenförmig verlegte Rohre 12 im Einsatz. Im mittleren Bereich der aus diesen beiden Sonnenkollektoren 10 bestehenden Solaranlage sind die Enden des jeweiligen Rohres 12 über ein Anschlußelement 14 miteinander verbunden, das im wesentlichen aus einem U-förmigen Verbindungsstück 16 - hier einem Rohrkrümmer - besteht. Zwei weitere, identisch ausgebildete Anschlußelemente 14 dienen zur Verbindung des Rohrsystems mit dem Rohr 12' einer Vorlaufleitung 18 bzw. einer Rücklaufleitung 20, die im dargestellten Ausführungsbeispiel zu einem Wärmespeicher 22 führen. Von diesem Wärmespeicher 22 führen Anschlußleitungen 24 zu nicht weiter dargestellten Verbrauchern, beispielsweise einer Heizung oder einem Warmwasserspeicher.

In den Figuren 1 und 2 ist angedeutet, daß jedes U-förmige Verbindungsstück 16 aus einem biegsamen Wellenschlauch 26 besteht, der aus Edelstahl oder Kupfer hergestellt und dessen Krümmung an die jeweiligen Gegebenheiten angepaßt werden kann.

Die beiden Enden jedes Verbindungsstücks 16 sind identisch ausgebildet und bestehen, wie der linke Teil der Figur 2 zeigt, aus einem Rohrstutzen 28 aus Messing oder Rotguß, der am Ende 30 des Verbindungsstücks 16 durch Hartlötung 32 befestigt ist. Zum freien Ende hin hat der Rohrstutzen 28 einen Anlagebund 34 für eine Überwurfmutter 36, die zum Aufschrauben auf das Anschlußgewinde 38 eines Gewindenippels 46 dient, der auf das Ende 40 des anzuschließenden Rohres 12 bzw. 12' aufgesetzt ist.

Das freie Ende des Rohrstutzens 28 ist, wie der linke Teil der Figur 2 weiter zeigt, gemäß der Erfindung als eine sich verjüngende Kontaktfläche 42 - hier als Teil einer Kugelkalotte - ausgebildet, die im fertig montierten Zustand des Verbindungsstücks 16 (rechter Teil der Figur 2) unmittelbar in das eine konische Dichtfläche 44 bildende, aufgeweitete Ende des anschließenden Rohres 12 bzw. 12' eingreift. Nachdem die Überwurfmutter 36 fest auf das Anschlußgewinde 38 des Gewindenippels 46 aufgeschraubt ist, wird durch die sich verjüngende Kontaktfläche 42 in Verbindung mit der konischen Dichtfläche 44 eine ringsum dichtende Anlage ohne Zwischenschaltung weiterer Dichtungselemente gewährleistet. Die als Kugelkalotte ausgebildete Kontaktfläche 42 hat den Vorteil, daß kleinere Fluchtungsfehler ausgeglichen werden können.

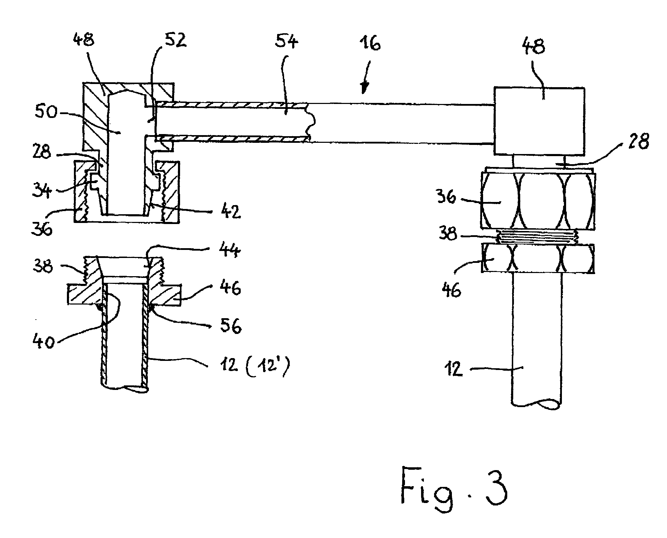

Bei der in Figur 3 gezeigten Variante ist der Rohrstutzen 28 des Verbindungsstücks 16 einstückig mit einem im wesentlichen zylindrischen Anschlußkopf 48 ausgebildet, der aus einem Drehteil aus Messing, Bronze oder Rotguß besteht. In diesen Anschlußkopf 48 ist eine Längsbohrung 50 eingearbeitet, die stufenlos und koaxial in die Längsbohrung des Rohrstutzens 28 übergeht. Am geschlossenen Ende des Anschlußkopfes 48 ist diese Längsbohrung 50 mit einer Radialbohrung 52 verbunden. In diese Radialbohrung 52 ist ein Verbindungsrohr 54 eingepaßt, das beispielsweise aus Kupfer bestehen kann und dessen gegenüberliegendes Ende (vgl. rechter Teil der Figur 3) die Verbindung zu einem ebenso ausgebildeten Anschlußkopf 48 herstellt. Das Verbindungsrohr 54 kann an beiden Enden mit dem jeweiligen Anschlußkopf 48 durch Hartlötung oder dergleichen fest verbunden sein.

Der linke Teil der Figur 3 zeigt ferner, daß die Kontaktfläche 42 am freien Ende des Rohrstutzens 28 kegelförmig ausgebildet ist. Beim Aufschrauben der Überwurfmutter 36 auf das Anschlußgewinde 38 des Gewindenippels 46 wird auch hier über die konische Kontaktfläche 42 und die konische Dichtfläche 44, die hier in das nach oben weisende Ende des Gewindenippels 46 eingearbeitet ist, eine einwandfreie Abdichtung hergestellt. Da beim Beispiel der Figur 3 die konische Dichtfläche 44 im Gewindenippel 46 ausgebildet ist, muß - im Gegensatz zum Beispiel der Figur 2 - das Ende 40 des anzuschließenden Rohres 12 bzw. 12' nicht aufgeweitet werden. Es genügt vielmehr, das zylindrische Ende 40 des Rohres 12 bzw. 12' in den zylindrischen Bohrungsteil des Gewindenippels 46 einzuschieben; anschließend kann eine Fixierung zwischen dem Rohrende 40 und dem Gewindenippel 46 durch einen Lötkranz 56 erfolgen.

## Patentansprüche

1. Anschlußelement für Sonnenkollektoren (10) mit einem von einem Wärmeträger durchströmten Rohr (12), dessen beide Enden über das als U-förmiges Verbindungsstück (16) ausgebildete Anschlußelement (14) mit dem Rohr (12) eines anschließenden Kollektors oder mit dem Rohr (12') einer Vorlauf- bzw. Rücklaufleitung (18, 20) verbindbar sind, wobei das Verbindungsstück (16) an beiden Enden Mittel zum Verbinden mit dem jeweiligen Ende des Rohres (12, 12') des anschließenden Kollektors bzw. der Vor- oder Rücklaufleitung hat, **dadurch gekennzeichnet, daß** beide Enden des Verbindungsstücks (16) aus einem Rohrstutzen (28) mit einem Anlagebund (34) für eine Überwurfmutter (36) zum Aufschrauben auf das Anschlußgewinde (38) am Ende (40) des anzuschließenden Rohres (12, 12') bestehen, wobei das freie Ende des Rohrstutzens (28) als eine sich verjüngende Kontaktfläche (42) für den unmittelbaren Eingriff in eine konische Dichtfläche (44) am anzuschließenden Rohr (12, 12') ausgebildet ist.

2. Anschlußelement nach Anspruch 1, **dadurch gekennzeichnet, daß** die Kontaktfläche (42) als Teil einer Kugelkalotte ausgebildet ist.

3. Anschlußelement nach Anspruch 1, **dadurch gekennzeichnet, daß** die Kontaktfläche (42) kegelförmig ausgebildet ist.

4. Anschlußelement nach einem der vorhergehenden Ansprüche, **dadurch gekennzeichnet, daß** die Dichtfläche (44) durch das aufgeweitete Ende des anzuschließenden Rohres (12, 12') gebildet ist.

5. Anschlußelement nach einem der Ansprüche 1 bis 3, **dadurch gekennzeichnet, daß** die Dichtfläche (44) in einen Gewindenippel (46) eingearbeitet ist, in dem das Ende (40) des anzuschließenden Rohres (12, 12') befestigt ist.

6. Anschlußelement nach einem der vorhergehenden Ansprüche, **dadurch gekennzeichnet, daß** der Rohrstutzen (28) aus Messing, Bronze oder Rotguß besteht und am Ende (30) des Verbindungsstücks (16) befestigt ist.

7. Anschlußelement nach einem der vorhergehenden Ansprüche, **dadurch gekennzeichnet, daß** das Verbindungsstück (16) aus einem Rohrkrümmer in Form eines biegsamen Wellenschlauchs besteht.

8. Anschlußelement nach einem der vorhergehenden Ansprüche, **dadurch gekennzeichnet, daß** das Verbindungsstück (16) aus Edelstahl oder Kupfer besteht, an dessen jeweiligem Ende (30) der Rohrstutzen (28) durch Hartlötung befestigt ist.

9. Anschlußelement nach einem der Ansprüche 1 bis 6, **dadurch gekennzeichnet, daß** der Rohrstutzen (28) des Verbindungsstücks (16) einstückig mit einem im wesentlichen zylindrischen Anschlußkopf (48) ausgebildet ist, in den eine zu dem Rohrstutzen (28) koaxiale Längsbohrung (50) eingearbeitet ist, die am geschlossenen Ende des Anschlußkopfes (48) in eine Radialbohrung (52) übergeht, in welche ein Verbindungsrohr (54) eingepaßt ist.

10. Anschlußelement nach Anspruch 9, **dadurch gekennzeichnet, daß** der Anschlußkopf (48) ein Drehteil aus Messing, Bronze oder Rotguß ist und das Verbindungsrohr (54) aus Kupfer oder Edelstahl besteht.
